# EUROPEAN PATENT APPLICATION

(11) **EP 4 163 872 A1**
(43) Date of publication of application: **12.04.2023**
(21) Application number: 21201838.6
(22) Date of filing: 11.10.2021
(51) Int. Cl.: G06T 7/11

(54) **ENHANCED SEGMENTATION**

(71) Applicant: Koninklijke Philips N.V., 5656 AG Eindhoven (NL)
(72) Inventor: WEBER, Frank Michael, Eindhoven (NL); NIJHOF, Niels, Eindhoven (NL); FABER, Albert Louw, Eindhoven (NL); VAN GEFFEN, Michel, Eindhoven (NL); ORASANU, Eliza Teodora, Eindhoven (NL); WEESE, Rolf Jürgen, Eindhoven (NL)
(74) Representative: Philips Intellectual Property & Standards

(57) **Abstract**

The present invention relates to segmentation. In order to provide a facilitated way of providing enhanced segmentation, a device (10) for enhanced segmentation via an interface is provided. The device comprises a data processor (12), and a data exchange interface (14). The data processor is configured to provide a base segmentation of a region of interest of a subject; wherein the base segmentation comprises a base plurality of information; to generate a reduced segmentation from the base segmentation; wherein the reduced segmentation comprises a reduced plurality of information; and wherein the reduced plurality of information comprises less information than the base plurality of information. The data exchange interface is configured to provide the reduced segmentation to a secondary data processing (18) for further processing to generate secondary data.

## Description

### FIELD OF THE INVENTION

The present invention relates to segmentation and relates in particular to a device for enhanced segmentation via an interface, to an imaging system for segmentation and to a method for enhanced segmentation.

### BACKGROUND OF THE INVENTION

For the purpose of planning medical interventional procedures, information from different sources may be combined. For example, fusion of X-ray image data and interventional ultrasound image data can be combined. Further, model-based segmentation can be provided and combined with image data. As another example, procedure-specific planning solutions based on X-ray imaging, like CT, can be combined with current ultrasound images. Anatomical models and procedure planning models can be combined, e.g. registered with model-based segmentation models in order to display them together or instead of the model-based segmentation models. Due to constant technological development, different devices and systems may be data-connected for combined data processing, for example for providing segmentation images of a vascular or other structure of a region of interest, in particular for cardiac applications. However, it has been shown that data exchange may be cumbersome and subject to complex regulations, while it is crucial to provide enhanced image information.

### SUMMARY OF THE INVENTION

There may thus be a need to provide a facilitated way of providing enhanced segmentation based on combining different data processing procedures.

The object of the present invention is solved by the subject-matter of the independent claims; further embodiments are incorporated in the dependent claims. It should be noted that the following described aspects of the invention apply also for the device for enhanced segmentation via an interface, for the imaging system for segmentation and for the method for enhanced segmentation.

According to the present invention, a device for enhanced segmentation via an interface is provided. The device comprises a data processor and a data exchange interface. The data processor is configured to provide a base segmentation of a region of interest of a subject. The base segmentation comprises a base plurality of information. The data processor is also configured to generate a reduced segmentation from the base segmentation. The reduced segmentation comprises a reduced plurality of information. The reduced plurality of information comprises less information than the base plurality of information. The data exchange interface is configured to provide the reduced segmentation to a secondary data processing for further processing to generate secondary data.

By providing a reduced segmentation, the data to be transferred and also to be processed, is reduced, and thus the exchange is facilitated.

As a further advantage, data from different sources can be combined and processed in a streamlined and customized manner.

An advantage of less data is also that it can be easier to further process the data since customized data can be targeted to the particular further processing. For example, certain anatomical structures can be selected, if these have been shown to be an improved basis for a more accurate further processing.

Another positive aspect is to be able to take data privacy regulations into account by forwarding and sharing a reduced segmentation. Only necessary data can be exchanged and thus shared.

In other words, as a technical benefit, the reduced segmentation can account for both systems and the experience that parties have with their own segmentations, e.g. their own types of mesh.

As an advantage, procedure planning, e.g. procedure planning models, from different sources can be imported into e.g. Philips interventional planning tools. Even though the variety of external suppliers, models and applications is potentially large, the present invention is capable of accounting for all, or at least a plurality, of potentially imported anatomies. Thus, even at the time of product release, future options with regards to compatibility are as wide as possible.

As an example, a segmentation, e.g. a base segmentation, is the result of a model-based segmentation (MBS), or the result of a different segmentation, e.g. convolutional neural network (CNN) based voxel-classification. An external system can then use that information to prealign anatomies to the base (primary) segmentation. By pre-aligning the external model to the model, it is also pre-aligned to the underlying image from which the base segmentation was created. This way, it could be displayed for example on top of the underlying image within the base/primary application, or vice versa.

According to an example, to provide the base segmentation, the data processor is configured to provide base image data of the region of interest of the subject. The data processor is also configured to generate a segmentation from the base image data as the base segmentation.

According to an example, the secondary data processing is provided as an external data processing procedure.

In an option, to generate the secondary data, the further processing comprises at least one of the group of registration of further image data to the reduced segmentation and pre-alignment of model data to the reduced segmentation.

According to an example, the data exchange interface is configured to receive secondary data from the secondary data processing, which secondary data is generated by the secondary data processing based on the reduced segmentation. The data processor is configured to provide a primary data processing combining the secondary data with the base segmentation to generate primary data relating to the region of interest.

In an option, an output interface is provided that is configured to provide the primary data.

According to an example, the data processor is configured to provide the base segmentation as a base mesh. To generate the reduced segmentation, the data processor is configured to reduce the base mesh based on pre-determined boundary conditions.

According to an example, the mesh comprises a set of vertices and a set of triangles. In order to generate the reduced segmentation, in one option, the data processor is configured to reducing the triangle related information. In another, additional or alternative option, the data processor is configured to select a subset of vertices of the set of vertices.

According to an example, the data processor is configured to identify at least one parameter relating to the secondary data processing, the at least one parameter comprising at least one of the group of type of planned intervention, type of data processing procedure, anatomical parts needed for the secondary data processing. The data processor is configured to generate a reduced segmentation depending on the identified at least one parameter.

According to an example, the identification comprises at least one of the group of i) authentication of the secondary data processing and ii) authentication of an external party that requests the reduced segmentation, which external party is configured to provide the secondary data processing.

According to the present invention, an imaging system for segmentation is provided. The imaging system comprises an imaging device for generating image data of the region of interest of the subject. The imaging system further comprises a device for enhanced segmentation according to one of the preceding examples. The imaging device is configured to provide the image data as a basis for the base segmentation.

According to the present invention, a method for enhanced segmentation is provided. The method comprising the following steps: providing a base segmentation of a region of interest of a subject, wherein the base segmentation comprises a base plurality of information; generating a reduced segmentation from the base segmentation, wherein the reduced segmentation comprises a reduced plurality of information and wherein the reduced plurality of information comprises less information than the base plurality of information; and providing the reduced segmentation to a secondary data processing for image processing to generate secondary data.

According to an aspect, a setup and procedure is proposed that creates a reduced segmentation result from the full segmentation, which is then provided via a defined interface to an external interactive application that re-supplies data to the system.

In another aspect, the external interactive application supplies the processed data to a further system or device, in addition or instead of supplying it back to the original system.

In an example, an external party can provide a pre-alignment of their input to the result of a heart model segmentation. Besides increased accuracy and decreased ambiguity, this also has benefits in terms of regulatory reasons since less data is exchanged.

In an example, a method and interface are proposed that create and provide a restricted, tailored anatomy derived from the base segmentation for registered secondary procedures, e.g. secondary vendors. If, for example, the base segmentation is an MBS result, the proposed solution contains a mesh reduction unit that converts the full MBS result mesh into a reduced mesh according to certain boundary conditions. Over an interface, e.g. a secondary or external interface, the secondary or external party can request the reduced segmentation and receive the result. As an option, the proposed method also contains an authentication unit coupled to the external interface over which the validity of the requesting party and the validity of an explicit procedure type connected to the party can be verified. Depending on the requesting secondary or external party and the requested procedure type, the boundary conditions for the mesh reduction unit are determined.

As an option for an efficient interventional planning tool, an external party authenticates itself, requests a mesh for a specific procedure, e.g. with an ID number that describes a mitral valve intervention and has been approved for that external party. The mesh reduction unit reduces the mesh, accordingly, e.g. exposing only a relevant anatomical subregion including mesh triangles, or only a limited set of vertices without triangles, which is provided over the interface to the external party.

The described variations of this solution can be used in targeting intervention planning, e.g. cardiac interventions, in particular in ultrasound applications for cardiac interventions, or also within the context of the so-called IntelliSpacePortal (ISP) from Philips. Furthermore, the invention may be implemented within cloud-based services/applications such as the Philips HealthSuite Digital Platform (HSDP).

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1 schematically shows an example of a device for enhanced segmentation via an interface.
Fig. 2 schematically shows an example of an imaging system for segmentation.
Fig. 3 shows steps of an example of a method for enhanced segmentation.
Fig. 4 shows an example of a further setup with a primary data processing device that is optionally data-connected with a secondary data processing device via an interface.
Fig. 5 shows an example of an overview.
Fig. 6 shows an example of different presets for different parties.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

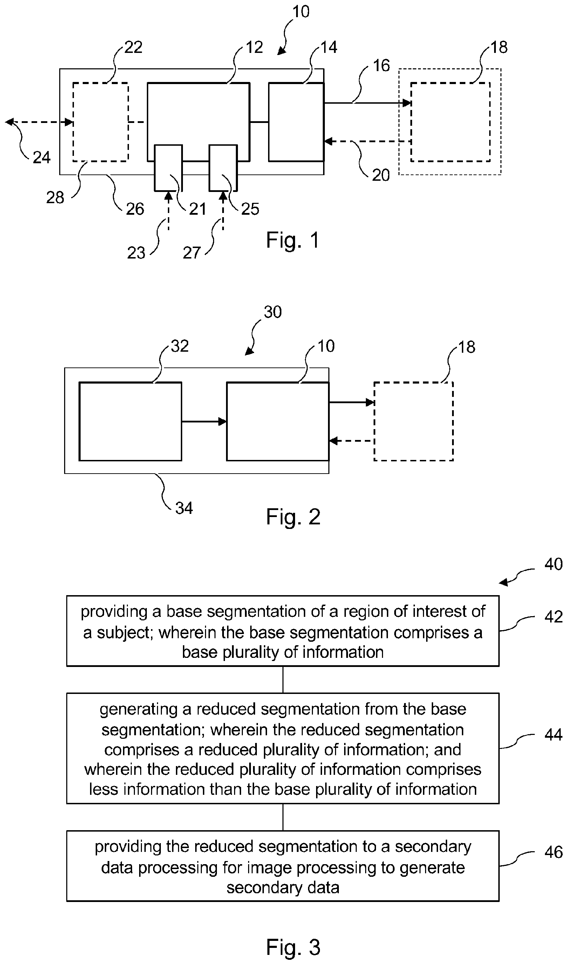

Fig. 1 schematically shows an example of a device 10 for enhanced segmentation via an interface. The device 10 comprises a data processor 12 and a data exchange interface 14. The data processor 12 is configured to provide a base segmentation of a region of interest of a subject. The base segmentation comprises a base plurality of information; to generate a reduced segmentation from the base segmentation. The reduced segmentation comprises a reduced plurality of information. The reduced plurality of information comprises less information than the base plurality of information. The data exchange interface 14 is configured to provide, as indicated with an export arrow 16, the reduced segmentation to a secondary data processing 18 for further processing to generate secondary data. The secondary data processing 18 is shown in Fig. 1 in hashed lines, as an option, even though it may belong to a separate unit or entity, for example an external device or system.

The data processor 12 can also be referred to as data processing module. The data processor 12 can also be referred to as data processing arrangement, as processor unit or as processor. In an example, the data processor 12 is data-connected to an image data input and an output interface (see below). In an example, the data processor 12 is provided as a segmenting engine that segments image data for identifying at least one branch of interest and that segments the image, e.g. an angiographic image for identifying branches of a vascular structure.

The data exchange interface 14 can also be referred to as data exchange interface module. The data exchange interface 14 can also be referred to as data exchange or data exchange unit. In an example, the data exchange interface 14 is data-connectable to another data processing device, image processing system or other planning processing device. In another example, the output of the device 10 is data-connected to another data processing device, image processing system or other planning processing device.

In an example, the data exchange interface 14 is an external software interface of a primary system, e.g. a Philips system, over which a further party, also referred to as secondary party, e.g. external parties, can request the result of a segmentation created with a primary algorithm or tool, e.g. a Philips algorithm or tool. The further party can also be referred as third party.

As examples, such an interface may build upon existing communication protocols such as HTTPS, SQL, or the like. The interface may require a primary, e.g. Philips, dynamic library link (DLL) to be integrated into the software of the secondary / external party, be part of a larger cloud system, such as Philips HSDP.

The interface may use respectively built-in authentication methods or use another form of proprietary protocol.

It is noted that segmentation refers to identifying anatomical structures, such as vessels like the vascular structure, organs, tissue structures and bone sections. The vascular structure can also be referred to as vascular tree. A segmenting of an angiographic image for identifying possible segments like branches of the vascular structure can also be referred to as semantic segmentation.

In an example, the segmentation relates to model-based segmentation. For example, a base segmentation is provided. This is then reduced in order to provide a further, reduced segmentation. The reduced segmentation may be model-related. The reduced segmentation can then be further processed in a further data processing, referred to as the secondary data processing. Further data can be combined. For example, current image data can then be overlaid to the reduced segmentation. The secondary data processing can be provided by an external party and the result may be provided as an input back from the external party. Further, the base segmentation and the external input can be combined or otherwise processed to generate the primary data as an output. For example, the segmented image is overlaid to an ultrasound image. In another option, an ultrasound image is overlaid to the segmented image. In an example, the base segmentation is overlaid to the ultrasound image, based on the secondary data processing. In an option, the ultrasound image is overlaid to the base segmentation, but based on the secondary data processing. In another example, the reduced segmentation is overlaid to the ultrasound image, based on the secondary data processing. In another option, the ultrasound image is overlaid to the reduced segmentation, based on the secondary data processing.

In an example, for a model-based segmentation, the initial result is an adapted mesh, and the mesh boundaries delineate the different anatomical segments. From this, a labelled image, like a bitmask, can be calculated, in which each voxel is assigned with the respective label of the segment it belongs to.

In an example, as the secondary data processing, a further segmentation is provided by a separate system, i.e. by a separate image processing device, different from the main data processing providing the overlay result. As such, the further or secondary segmentation can be provided in an improved and optimized manner, for example by referring to a segmentation provided by another device or system, e.g. also from a different vendor. The open data exchange interface allows co-registration in an efficient manner.

In an example, a model based on the reduced segmentation is provided in return.

The data exchange interface enables a system that controls which party can have access to which data. This provides different access categories to the actual data of the subject and facilitates computing steps based on only a part of the information. Different technical levels of access are thus possible.

In an example, an external party can look at the reduced segmentation in form of a reduced mesh and pre-register their model data. When handing over the data back to the primary system, a roughly good position is already provided which can then be subject to a second registration, e.g. by the primary system. The first registration, e.g. a pre-registration, is provided in the external world, i.e. the external system, and the second registration is provided in the primary world, i.e. the primary system.

Basically, the reduced segmentation provides a set of relevant anatomy parts, e.g. by relevant anatomy mesh parts, which are defined by the secondary system according to the criteria which data is needed for which procedure.

In an example, the term "defined" relates to defining this in the sense that, depending on the type of external party and/or procedure, the primary system may select other methods to create it, but not such that the secondary system has an active choice.

In an additional scenario, a specific procedure/vendor not only results in one single fixed setup, but in a choice of setups, e.g. two or three, from which the external party can then choose via the interface.

Another result is that the targeted reduced segmentation, i.e. the pre-selection before the secondary data processing is provided, allows to avoid ambiguity by selecting those parts that have been shown to be less prone to ambiguity.

The secondary data processing can also be referred to as secondary data processing procedure.

It is noted that the terms "primary" and "secondary" are related to two different "worlds", which can be two different data processing systems, two different devices within one system or even two different data processing sections within one data processor. The difference is for example provided by different access rights or different controlling entities. The term "primary" is thus related to an entity that has control over the segmentation, whereas the term "secondary" is related to another entity that should not have complete but only restricted or reduced control over the segmentation. The two terms "primary" and "secondary" are not related to a temporal order or the like.

The "base segmentation" is also referred to as primary segmentation or segmentation.

The "reduced segmentation" is also referred to as segmentation, reduced primary segmentation or secondary segmentation.

The "secondary data processing" is also referred to as data processing, further data processing, further image processing or secondary image processing.

The "secondary data" is also referred to as data, enhanced data, processed data, secondary enhanced data, image-related data, enhanced image-related data, processed image-related data, secondary enhanced image-related data, secondary image-related data, image data, enhanced image data, processed image data, secondary enhanced image data or secondary image data.

In example, to provide the base segmentation, the data processor 12 is configured to provide base image data of the region of interest of the subject, and to generate a segmentation from the base image data as the base segmentation.

In one example, the base image data is provided by an imaging system.

In another example, the base image data is provided by a data memory, e.g. a data storage.

Fig. 1 shows as an option that the secondary data processing 18 is provided as an external data processing procedure. In an option, to generate the secondary data, the further processing comprises at least one of the group of registration of further image data to the reduced segmentation and pre-alignment of model data to the reduced segmentation.

In an example, the term "secondary data" relates to a combination of image data and a segmentation result.

In another example, the term "secondary data" relates to further data, like a segmentation being subject or result of the further, i.e. secondary data processing.

The term "external" relates to a separate data processing, e.g. by another system or another, e.g. external party. An external data processing may thus be provided by a separate computer or even a separate imaging system.

In an example, the data exchange interface 14 is configured to receive secondary data from the secondary data processing 18, as indicated with import arrow 20, which secondary data is generated by the secondary data processing 18 based on the reduced segmentation. The data processor 12 is configured to provide a primary data processing combining the secondary data with the base segmentation to generate primary data relating to the region of interest. As an option, an output interface 22 is provided that is configured to provide the primary data, as indicated with output/input arrow 24.

A frame 26 indicates that the data processor 12, the data exchange interface 14 and the output interface 22 can be provided in a common housing structure or in an otherwise integrated manner. However, they can also be arranged separate but within a common arrangement.

The output interface 22 can also be referred to as output interface module. The output interface 22 can also be referred to as output or output unit. In an example, the output interface 22 is data-connectable to a display arrangement or display device. In another example, the output interface 22 is data-connected to a display (not shown).

In an example, the generated primary data is an enhanced image. For example, the mesh from an external party is overlaid onto an ultrasound image, and that ultrasound image plus a mesh rendering make up the new enhanced image.

The "primary data processing" is also referred to as combining, data processing, image data processing or primary image data processing.

The "primary data" is also referred to as image data, enhanced image data, processed image data, primary enhanced image data, primary image data, enhanced data, processed data, or primary enhanced data.

In an example, the data processor 12 is configured to provide the base segmentation as a base mesh. To generate the reduced segmentation, the data processor 12 is configured to reduce the base mesh based on pre-determined boundary conditions.

In an example, the base segmentation is a set of voxel labels, e.g. from a CNN classification. The reduced segmentation comprises only a subset of voxel labels.

In an example, to generate the reduced segmentation, the data processor 12 is configured to transform the base segmentation into a reduced segmentation that contains only a pre-determined relevant anatomical subregion.

In another example, to generate the reduced segmentation, the data processor 12 is configured to reduce a set of anatomical labels assigned to the base mesh. In a further example, to generate the reduced segmentation, the data processor 12 is configured to provide the transformation of the base segmentation into the reduced segmentation that contains only the pre-determined relevant anatomical subregion, as well as the reduction of the set of anatomical labels assigned to the base mesh.

In an example, to generate the reduced segmentation, the data processor 12 is configured to transform the base mesh into a reduced submesh that contains only the pre-determined relevant anatomical subregion.

In an option, the data processor 12 is configured to remove or even reduce the set of anatomical labels assigned to triangles of a model-based segmentation mesh.

In an example, in which the base segmentation is a set of voxel labels, the reduced segmentation is generated by keeping only those voxels that belong to a certain set of voxel labels and setting the remaining voxels to a background label.

In an example, the mesh comprises a set of vertices and a set of triangles. To generate the reduced segmentation, the data processor is configured to at least one of the group of reduction of the triangle related information and selection of a subset of vertices of the set of vertices.

In an option, the data processor 12 is configured to remove all of the triangle information keeping the vertex information.

In an example, to select the subset of vertices, the data processor 12 is configured to a selection of different types of subsets of vertices for different subjects, but the same type of set of vertices being used for multiple requests on the same subject.

In another example, provided alternatively or in addition, to select the subset of vertices, the data processor 12 is configured to a usage of different orders for the vertices for different subjects, but the same order being used for multiple requests on the same subject.

In an example, the data processor 12 is configured to identify at least one parameter relating to the secondary data processing, the at least one parameter comprising at least one of the group of type of planned intervention, type of data processing procedure and anatomical parts needed for the secondary data processing. The data processor 12 is configured to generate a reduced segmentation depending on the identified at least one parameter.

In an example, shown in Fig. 1 as an option, an identificator 21 is provided that is configured to identify the at least one parameter relating to the secondary data processing and to generate a reduced segmentation depending on the identified at least one parameter. The identificator 21 can also be referred to as identification unit or identification module. An identification arrow 23 indicates an input, e.g. by an external party, of respective information needed for the identification.

In an example, shown in Fig. 1 as another option, in addition or alternatively, an authenticator 25 is provided that is configured to authenticate the secondary data processing and/or to authenticate the external party that requests the reduced segmentation, which external party is configured to provide the secondary data processing. The authenticator 25 can also be referred to as authentication unit or authentication module. An authentication arrow 27 indicates an input, e.g. by an external party, of respective information needed for the authentication.

In another example, the identification comprises at least one of the group of i) authentication of the secondary data processing and ii) authentication of an external party that requests the reduced segmentation, which external party is configured to provide the secondary data processing.

In an option, also shown in Fig. 1, a data input 28 is provided, in an option combined with the output interface 22. The data input 28 is configured to provide image data of the region of interest of the subject, as indicated with the output/input arrow 24, to the data processor 12. The data processor 12 is configured to generate the base segmentation based on the provided image data.

In an option, the data input 28 is configured to provide the base segmentation of the region of interest of the subject to the data processor 12.

The data input 28 can also be referred to as data input module. The data input 28 can also be referred to as data supply, as image supply, as image data supply, as segmentation input, as input unit or simply as input. In an example, the data input 28 is data-connectable to an imaging source arrangement like an X-ray imaging system, e.g. an X-ray CT imaging system or an MR imaging system or an ultrasound imaging system providing the image data of the subject which is used for the segmentation. In an example, the image data input 28 is data-connectable to a data storage having stored the image data.

Fig. 2 schematically shows an example of an imaging system 30 for segmentation. The imaging system 30 comprises an imaging device 32 for generating image data of the region of interest of the subject and an example of the device 10 for enhanced segmentation according to one of the preceding examples. The imaging device 32 is configured to provide the image data as a basis for the base segmentation.

A frame 34 indicates that the imaging device 32 and the device 10 for enhanced segmentation can be provided in a common housing structure or in an integrated manner. However, they can also be arranged separate but within a common arrangement.

Fig. 3 shows steps of an example of a method 40 for enhanced segmentation. The method 40 comprising the following steps: In a first step 42, a base segmentation of a region of interest of a subject is provided. The base segmentation comprises a base plurality of information. In a second step 44, a reduced segmentation from the base segmentation is generated. The reduced segmentation comprises a reduced plurality of information. The reduced plurality of information comprises less information than the base plurality of information. In a third step 46, the reduced segmentation is provided to a secondary data processing for image processing to generate secondary data.

In an example of the method 30 (not shown in detail), for providing the base segmentation, it is provided the steps of: providing primary or base image data of the region of interest of the subject; and generating a segmentation from the primary/base image data as the base segmentation.

In an example of the method 30 (also not shown in detail), the secondary data processing is provided as an external data processing procedure.

In an example of the method 30 (not shown in detail), for generating the secondary data, the further processing comprises at least one of the group of registering further image data to the reduced segmentation and pre-aligning model data to the reduced segmentation.

In an example of the method 30 (not shown in detail), the method further comprises the steps of: receiving the secondary data and combining the registered further image data with the base segmentation.

In an example of the method 30 (also not shown in detail), the base segmentation is provided as a base mesh. For generating the reduced segmentation, the mesh is reduced based on pre-determined boundary conditions.

In an example of the method 30 (not shown in detail), for generating the reduced segmentation, the base segmentation is transformed into a reduced segmentation that contains only a pre-determined relevant anatomical subregion.

In an example of the method 30 (also not shown in detail), for generating the reduced segmentation, a set of anatomical labels assigned to the base mesh, is at least reduced.

In an example of the method 30 (not shown in detail), the mesh comprises a set of vertices and a set of triangles. For generating the reduced segmentation, it is provided at least one of the group of: at least reducing triangle related information; and selecting a subset of vertices of the set of vertices.

In an example of the method 30 (also not shown in detail), for selecting the subset of vertices it is provided at least one of the following: i) different types of subsets of vertices are selected for different subjects, but the same type of set of vertices is used for multiple requests on the same subject; and ii) different orders for the vertices are used for different subjects, but the same order is used for multiple requests on the same subject.

In an example of the method 30 (not shown in detail), it is provided the step of identifying at least one parameter relating to the secondary data processing. The reduced segmentation is generated depending on the identified at least one parameter.

In an example of the method 30 (also not shown in detail), the identifying comprises at least one of the group of: i) authenticating the secondary data processing; and ii) authenticating an external party requesting the reduced segmentation, which external party is providing the secondary data processing.

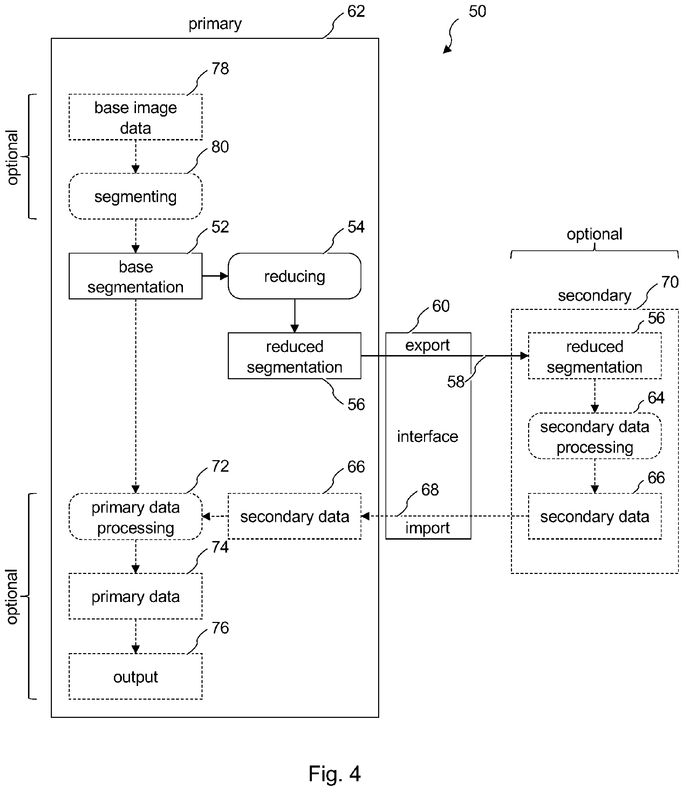

Fig. 4 shows an example of a further setup 50 with a primary data processing device (left part) that is optionally data-connected with a secondary data processing device (right part) via an interface (in between). As a basic start, within a first or primary system world, a base segmentation 52 is provided which is then subject of a reducing step 54. As a result, a reduced segmentation 56 is generated. The reduced segmentation 56 is provided, as indicated with "export" and first arrow 58, e.g. via an interface 60, referred to as data exchange interface, to another entity like a second or secondary system world.

The first or primary system world is indicated with a first frame 62, to which the interface 60 can be attached or provided in an integrated manner.

The secondary system world provides the reduced segmentation 56 which is then subject of a secondary data processing 64. As a result, secondary data 66 is generated. The secondary data 66 is provided, as indicated with "import" and second arrow 68, e.g. via the interface 60, back to the first or primary system world.

The secondary system world is indicated with a second frame 70.

The primary system world provides the secondary data 66 which is then subject of a primary data processing 72. As a result, primary data 74 is generated. This can be provided via an output 76.

As an option, base image data 78 can be provided which is then subject of a segmenting step 80. As a result, the base segmentation 52 is generated.

The primary world may be a Philips system and the secondary world may be a third party system. The interface is part of the primary world.

The step of the secondary world, i.e. the secondary data processing 64 of the reduced segmentation 56 generating the secondary data 66, is shown in hashed lines indicating that this is provided as an option.

The step of the primary world of the primary data processing 72 providing the primary data 74 to the output 76, is shown in hashed lines indicating that this is also provided as an additional or alternative option.

The step of the primary world of the segmenting 80 the base image data 78 generating the base segmentation 52, is shown in hashed lines indicating that this is provided as an additional or alternative option.

The term "subject" may also be referred to as individual. The "subject" may further also be referred to as patient, although it is noted that this term does not indicate whether any illness or disease is actually present with the subject.

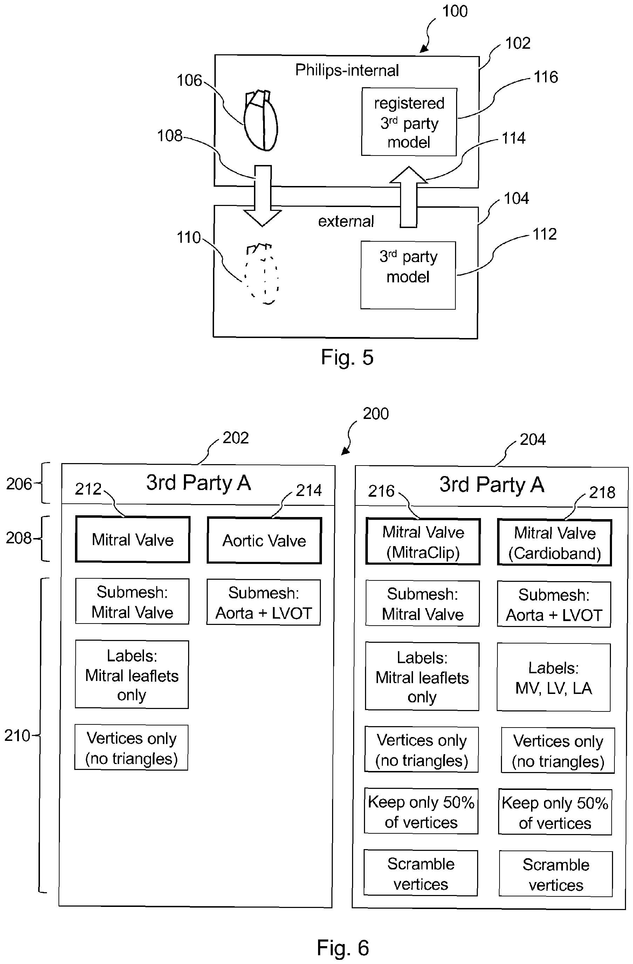

Fig. 5 provides an example in a general overview 100. A primary domain 102, e.g. a Philips-internal domain, and an external domain 104, e.g. an outside-Philips domain, are provided. In the primary domain 102, a detailed segmentation result 106 is provided. Via the external interface, only a reduced version of the mesh 110 is exposed, as indicated with a first arrow 108. The reduced version of the mesh 110 is detailed enough so that a secondary party, e.g. an external party, can register their models to the world, i.e. reference frame of the primary model, without the primary domain exposing too many details of the primary segmentation. Hence, a so-to-speak indirect registration of the external models to the primary model is provided via the registration of the external model to the reduced segmentation. By registering a secondary model to the primary model, it is automatically pre-aligned to the underlying image from which the Philips segmentation was created. Via the external interface, an external, i.e. 3rd party model 112 is provided, as indicated with a second arrow 114, providing a registered 3rd party model 116 back into the primary world, i.e. primary domain 102.

Fig. 6 shows an example of different presets 200 for different parties.

Fig. 6, left part, shows an example of presets 202 for a first type of secondary party 206, e.g. party A. For party A, two presets 208 are defined with preset parameters 210 - one for mitral valve interventions 212, comprising only the mitral valve submesh, and one for Aortic Valve interventions 214, comprising the Aorta and the left ventricular outflow tract (LVOT). For the mitral valve interventions, no triangles are exposed.

Fig. 6, right part, shows an example of presets 204 for a second type of the secondary party 206, e.g. party B. For party B, two presets 208 are defined which both involve the mitral valve, but with different settings depending on the detailed procedure type, i.e. MitraClip 216 or CardioBand 218. For Party B, only 50% of the vertices are exposed, and their order is randomized.

In an option, an authentication unit is provided. The authentication unit is coupled to the external interface or integrated into the external interface or a system comprising the external interface. It is noted that the term external is used for secondary. The authentication unit addresses two aspects:

As a first aspect, authentication/identification of the external party itself is provided. This part allows only registered external parties to retrieve data via the interface. It may, for example, build upon a user/password scheme or public/private key pairs. In this aspect, a username of the external party (such as "PartyA" or "PartyB") is identified.

As a second aspect, decision on which types of segmentation reduction methods can/will be applied in the segmentation reduction unit is provided. This typically refers to the type of procedures that are requested. As a concrete example, Party A may have permission to receive reduced segmentations for registering their results for both mitral valve and aortic valve planning. Party B, in contrast, is only allowed to request reduced segmentations for aortic valve planning. Further, a specific set of segmentation reduction methods can be stored as individual profiles per party, meaning that the segmentation reduction parameters for Party A requesting a segmentation for a mitral valve procedure may be different than the segmentation reduction parameters for Party B requesting a segmentation for their mitral valve procedure.

In an option, a segmentation reduction unit is provided. In the case of a model-based segmentation (MBS), this is a mesh reduction unit. An example implementation of a mesh reduction unit is given here.

An MBS model and derived segmentation results are represented as triangular mesh. It comprises a set V of nV vertices and a set T of nT triangles, the latter defined by connections between the vertices. In detail, a triangle t is defined by the respective vertex indices {vt,1, vt,2, vt,3}. The area spanned by these three vertices is planar and comprises a local part of the mesh surface, which is typically needed to display the local surface. The information about which vertex groups comprise which triangles defines the surface of the complete mesh that can, for example, be used displayed the complete mesh. If only the vertices are known, it may still be known that those vertices are part of the surface, but not how they need to be connected to actually form the surface (imagine especially the case of two parallel surfaces).

Each of the triangles and/or vertices carries further anatomical information, for example as a list of labels, comprising a set LT of anatomical labels for the triangles and/or a set LV of anatomical labels for the vertices. In other words, for an anatomical structure for which information has been encoded into the model (e.g. the mitral valve), it is possible to identify the vertices VMV and triangles TMV that comprise the mesh subregion of the mitral valve. Furthermore, neighbor relations between the triangles and vertices would, for example, also allow to identify all vertices/triangles that lie within a certain distance to an anatomical structure (calculated as geodesic distance on the mesh), thus creating an extended anatomical region with vertices VMV,ext and triangles TMV,ext.

Based on the requesting party and the requested procedure, a profile for each vendor/procedure or combination thereof can be created and stored (for example at the time access for a third party to the Philips system is negotiated/granted). This profile contains which information is necessary to the party and/or procedure and which information is not. Based on such a profile, one or several reduction methods, e.g. segmentation reduction methods, of the following list can then be applied:

In a first application, it is provided reducing the mesh to a submesh that only contains a relevant anatomical subregion based on the vendor/procedure profile to which the request belongs. For example, if Party A requests a mesh for a mitral valve procedure, a mesh is created solely containing vertices VMV and triangles TMV. For Party B requesting a mesh for a mitral valve procedure, different requirements have been identified and are now contained in the respective profile. For Party B, the mitral valve submesh contains an extended region covering the mitral valve itself and 10mm around it, leading to a different set of VMV,ext and triangles TMV,ext.

In a second application, it is provided removing or reducing the set of anatomical labels L. For example, Party A may receive only the mesh itself with no anatomical labels at all, while Party B receives certain labels that are necessary (e.g. identification of the mitral valve in general), but not others, more sophisticated labels (e.g. labels needed to do certain mitral valve measurements that should only be available inside the Philips system).

In a third application, it is provided removing all triangle information from the mesh and only keeping vertex information. This information may still be useful for registering the anatomy of the external party to the Philips segmentation, e.g. via algorithms such as iterative closest points (ICP) or coherent point drift (CPD), but hides the surface information needed for rendering, as well as shape and structure definition.

In a fourth application, it is provided, additionally to removing the triangle information, exposing only a subset V* of vertices to the external party. In a simple form, the subset V* can be derived from the original set V by random sampling. To keep a fraction of 0.5 (50%) of the vertices, this can be achieved by drawing a random value between 0 and 1 for each vertex. If the number is below a threshold of 0.5, the vertex is kept, otherwise disregarded. Improved methods could include grid averaging, in which vertices within a small local vicinity are merged to a single point in the output.

In a fifth application, in case only a subset of vertices is exposed, it is provided that two subtle modifications can be made to keep it possible to register external anatomies, but make it more difficult to derive other parameters from the geometry: First, a different set of vertices can be used for different patients (but the same set of vertices is used for multiple requests on the same patient). This avoids that by multiple requests, in sum the whole set of vertices can be retrieved. Second, the order of vertices is randomized. Again, for the same subject, e.g. same patient, the same order is used, but a different order is used for different subjects, e.g. different patients.

A further implementation may be to expose vertices and triangles in a consistent order for one registered profile, and in another, consistent and known order in another registered profile. This way, the exposed anatomical structures receive some kind of tagging that may allow to reconstruct under which profile they had been exposed.

In another exemplary embodiment of the present invention, a computer program or a computer program element is provided that is characterized by being adapted to execute the method steps of the method according to one of the preceding embodiments, on an appropriate system.

The computer program element might therefore be stored on a computer unit or be distributed over more than one computer units, which might also be part of an embodiment of the present invention. This computing unit may be adapted to perform or induce a performing of the steps of the method described above. Moreover, it may be adapted to operate the components of the above described apparatus. The computing unit can be adapted to operate automatically and/or to execute the orders of a user. A computer program may be loaded into a working memory of a data processor. The data processor may thus be equipped to carry out the method of the invention.

Aspects of the invention may be implemented in a computer program product, which may be a collection of computer program instructions stored on a computer readable storage device which may be executed by a computer. The instructions of the present invention may be in any interpretable or executable code mechanism, including but not limited to scripts, interpretable programs, dynamic link libraries (DLLs) or Java classes. The instructions can be provided as complete executable programs, partial executable programs, as modifications to existing programs (e.g. updates) or extensions for existing programs (e.g. plugins). Moreover, parts of the processing of the present invention may be distributed over multiple computers or processors.

As discussed above, the processing unit, for instance a controller implements the control method. The controller can be implemented in numerous ways, with software and/or hardware, to perform the various functions required. A processor is one example of a controller which employs one or more microprocessors that may be programmed using software (e.g., microcode) to perform the required functions. A controller may however be implemented with or without employing a processor, and also may be implemented as a combination of dedicated hardware to perform some functions and a processor (e.g., one or more programmed microprocessors and associated circuitry) to perform other functions.

Examples of controller components that may be employed in various embodiments of the present disclosure include, but are not limited to, conventional microprocessors, application specific integrated circuits (ASICs), and field-programmable gate arrays (FPGAs).

This exemplary embodiment of the invention covers both, a computer program that right from the beginning uses the invention and a computer program that by means of an up-date turns an existing program into a program that uses the invention.

Further on, the computer program element might be able to provide all necessary steps to fulfil the procedure of an exemplary embodiment of the method as described above.

According to a further exemplary embodiment of the present invention, a computer readable medium, such as a CD-ROM, is presented wherein the computer readable medium has a computer program element stored on it which computer program element is described by the preceding section. A computer program may be stored and/or distributed on a suitable medium, such as an optical storage medium or a solid-state medium supplied together with or as part of other hardware, but may also be distributed in other forms, such as via the internet or other wired or wireless telecommunication systems.

However, the computer program may also be presented over a network like the World Wide Web and can be downloaded into the working memory of a data processor from such a network. According to a further exemplary embodiment of the present invention, a medium for making a computer program element available for downloading is provided, which computer program element is arranged to perform a method according to one of the previously described embodiments of the invention.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A device (10) for enhanced segmentation via an interface, comprising:
- a data processor (12); and
- a data exchange interface (14);
wherein the data processor is configured to provide a base segmentation of a region of interest of a subject; wherein the base segmentation comprises a base plurality of information; to generate a reduced segmentation from the base segmentation; wherein the reduced segmentation comprises a reduced plurality of information; and wherein the reduced plurality of information comprises less information than the base plurality of information; and
wherein the data exchange interface is configured to provide the reduced segmentation to a secondary data processing (18) for further processing to generate secondary data.

2. Device according to claim 1, wherein, to provide the base segmentation, the data processor is configured to provide base image data of the region of interest of the subject; and to generate a segmentation from the base image data as the base segmentation.

3. Device according to claim 1 or 2, wherein the secondary data processing is provided as an external data processing procedure; and
wherein, to generate the secondary data, the further processing comprises at least one of the group of:
- registration of further image data to the reduced segmentation; and
- pre-alignment of model data to the reduced segmentation.

4. Device according to claim 1, 2 or 3, wherein the data exchange interface is configured to receive secondary data from the secondary data processing, which secondary data is generated by the secondary data processing based on the reduced segmentation;
wherein the data processor is configured to provide a primary data processing combining the secondary data with the base segmentation to generate primary data relating to the region of interest; and
wherein, an output interface (22) is provided that is configured to provide the primary data.

5. Device according to one of the preceding claims, wherein the data processor is configured to provide the base segmentation as a base mesh; and
wherein, to generate the reduced segmentation, the data processor is configured to reduce the base mesh based on pre-determined boundary conditions.

6. Device according to claim 5, wherein, to generate the reduced segmentation, the data processor is configured to at least one of the group of:
- transformation of the base segmentation into a reduced segmentation that contains only a pre-determined relevant anatomical subregion; and
- reduction of a set of anatomical labels assigned to the base mesh.

7. Device according to one of the preceding claims, wherein the mesh comprises a set of vertices and a set of triangles; and
wherein, to generate the reduced segmentation, the data processor is configured to at least one of the group of:
- reduction of the triangle related information; and
- selection of a subset of vertices of the set of vertices.

8. Device according to claim 7, wherein, to select the subset of vertices, the data processor is configured to at least one of the group of:
i) selection of different types of subsets of vertices for different subjects, but the same type of set of vertices being used for multiple requests on the same subject; and
ii) usage of different orders for the vertices for different subjects, but the same order being used for multiple requests on the same subject.

9. Device according to one of the preceding claims, wherein the data processor is configured to identify at least one parameter relating to the secondary data processing, the at least one parameter comprising at least one of the group of: type of planned intervention, type of data processing procedure, anatomical parts needed for the secondary data processing; and
wherein the data processor is configured to generate a reduced segmentation depending on the identified at least one parameter.

10. Device according to one of the preceding claims, wherein the identification comprises at least one of the group of:
i) authentication of the secondary data processing; and
ii) authentication of an external party that requests the reduced segmentation, which external party is configured to provide the secondary data processing.

11. Device according to one of the preceding claims, further comprising:
- a data input (28) configured to provide image data of the region of interest of the subject to the data processor;
wherein the data processor is configured to generate the base segmentation based on the provided image data.

12. An imaging system (30) for segmentation, comprising:
- an imaging device (32) for generating image data of the region of interest of the subject; and
- a device (10) for enhanced segmentation according to one of the preceding claims;
wherein the imaging device is configured to provide the image data as a basis for the base segmentation.

13. A method (40) for enhanced segmentation, the method comprising the following steps:
- providing (42) a base segmentation of a region of interest of a subject; wherein the base segmentation comprises a base plurality of information;
- generating (44) a reduced segmentation from the base segmentation; wherein the reduced segmentation comprises a reduced plurality of information; and wherein the reduced plurality of information comprises less information than the base plurality of information; and
- providing (46) the reduced segmentation to a secondary data processing for image processing to generate secondary data.

14. A computer program enabling a processor to carry out the method of claim 13.

15. A computer readable medium having stored the program element of claim 14.
